(19) Europäisches Patentamt
European Patent Office
Office européen des brevets

(11) Publication number: 0 266 910
A2

(12) # EUROPEAN PATENT APPLICATION

(21) Application number: 87308858.7

(22) Date of filing: 06.10.87

(51) Int. Cl.⁴: C07B 59/00 , C07F 13/00

(30) Priority: 09.10.86 GB 8624272

(43) Date of publication of application:
11.05.88 Bulletin 88/19

(84) Designated Contracting States:
AT BE CH DE ES FR GB IT LI NL SE

(71) Applicant: AMERSHAM INTERNATIONAL plc
Amersham Place
Little Chalfont Buckinghamshire HP7 9NA(GB)

(72) Inventor: Chiu, Kwok Wai, Dr.
157 Mary's Mead
Hazlemere Buckinghamshire(GB)

(74) Representative: Pennant, Pyers et al
Stevens, Hewlett & Perkins 5 Quality Court
Chancery Lane
London, WC2A 1HZ(GB)

(54) **Cationic complexes of Tc-99m.**

(57) The invention provides catonic complexes of technetium-99m with bidentate phosphine or arsine ligands having a single carbon atom between the two P or As atoms. The preferred ligand is $(CH_3)_2\ PCH_2P(CH_3)_2$. Rat biodistribution data indicate that the complexes will be of interest as heart imaging agents in humans.

EP 0 266 910 A2

## Cationic Complexes of Tc-99m

This invention relates to cationic complexes of technetium-99m (Tc-99m) with bidentate ligands which have a single C atom between the ligating atoms.

US Patent 4481184 describes complexes of the type $(TC\text{-}99mL_3)^+$ where L is a bidentate ligand of formula $R_2X(CH_2)_mXR_2$ where X may be phosphorus or arsenic and m is 1, 2 or 3. There is no specific description of any ligand or complex in which m is 1. Indeed, it would have been expected that complexes of the type described would not have been formed with ligands where m is 1, because:-

(a) There are no known complexes of technetium involving bidentate neutral ligands having a single carbon atom between the ligating atoms.

(b) In general, ligands of this class have a strong tendency to bridge metal atoms rather than act as chelating ligands.

Other patents which describe cationic complexes of Tc-99m with bidentate ligands in which the ligating atoms are P or As includes US 4387087; US 4489054; US 4374821; US 4451450; US 4526776.

The present invention provides a cationic complex of Tc-99m with a ligand of formula $R^1R^2C(XY_2)_2$, where X is in each case P or As,

Y is in each case a hydrogen atom or an unsubstituted or substituted hydrocarbon or hyrocarbonoxy group, and

$R^1R^2C$ is an unsubstituted or substituted methylene group.

The complex may be formed by standard chemical reactions, for example by mixing pertechnetate $(TcO_4^-)$ with the ligand under alkaline conditions in a polar solvent at elevated temperature. In forming the complex it is likely that the valency state of the Tc-99m may be reduced from +7, perhaps to +1 or +3. Although the ligand functions as a reducing agent, it may be advantageous to add an extraneous reducing agent, such as for example a tetraalkylammonium borohydride or sodium dithionite or a stannous salt, to enable the reaction to go more quickly or under less stringent conditions. The pH of the solution is preferably at least 9 and typically more than 12. The solvent is preferably a hydrophilic solvent such alcohol, alcohol/water or water. The mixture is preferably maintained at the boiling point of the solvent until complex formation has taken place, although in the absence of an extraneous reducing agent heating under pressure may be required.

The formula of the complex, which may contain one or more than one Tc atom, is not presently known. It may perhaps be $(TcL_3)^+$ or $(TcL_2Z_2)^+$ or less likely $(TcL_2O_2)^+$, where L represents the ligand and Z represents a monovalent anion such as chloride or bromide.

In the ligand, the ligating atoms X are preferably both the same. The group Y is preferably the same in all cases, and is preferably a C1 to C4 alkyl or alkoxy group, particularly methyl. Or there could be attached to each ligating atom one hydrogen atom and one lower alkyl or alkoxy group. The biodistribution properties of these complexes are expected to depend on how lipophilic they are, and this can be controlled by controlling the size of the groups Y.

The group $R^1$ may be H or a substituent group for example -R, -OR, -SR, $-CH_2OR$, $-CH_2SR$, $-CO_2R$, -COR, -phenyl, $-CF_3$, $-CH_2F$, $-CHF_2$, -F, $-CONR_2$, -O-phenyl, where R is C1 to C4 alkyl preferably methyl. $R_2$ is preferably H, or F or $CH_3$. Alternatively, $R^1$ and $R^2$ may together be the group =CHR.

The Cationic complexes of this invention are suitable, with a physiologically acceptable anion, for administration to mammals such as humans. They are agents for imaging parts of the body, particularly the heart, or alternatively the blood pool or the hepatobiliary system.

The following examples illustrate the invention.

All operations were carried out under nitrogen except where specified. All organic solvents were dried appropriately with standard methods. $Et_2PCH_2PEt_2$[(1)], $Me_2PCH(Me)PMe_2$[(2)], $Me_2PC(Me)_2PMe_2$[(2)], and $(NH_4)_2TcCl_6$[(3)], were prepared according to published literature. $Me_2PCH_2PMe_2$ was obtained from Strem.

REFERENCES

1) H H KARSCH, Z.Naturforsch.Anorg.Chem., 1983, 38(B), 1027.
2) H H KARSCH, A.Naturforsch.Anorg.Chem., 1984 39(B), 1518.
3) J. DALZIEL, N S GILL, R S NYHOLM AND R D PEACOCK, J.Chem.Soc. 1958, 4012.
4) M J ABRAMS, PhD Thesis 1983 with A Davison at Massachusetts Institute of Technology.
5) G J KUBAS, Inorganic Synthesis, Vol.19, 90.

EXAMPLE

PREPARATION AND ANIMAL BIODISTRIBUTION DATA FOR L, COMPLEXES OF $^{99}$TC

MATERIALS

$Bu_4N$ Br 0.2ml (200mg/ml in ethanol, stock solution)
EtOH 1.0ml

5 L = 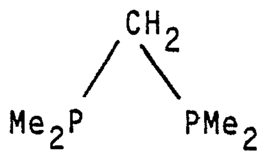 0.02 ml ($1.47 \times 10^{-4}$ moles)

NaOH solution (aq) 0.05ml (10M aqueous stock solution)
$NH_4{}^{99m}TcO_4$* 0.5ml (5GBq/ml)

* A stock sample of $^{99m}$Tc generator eluate in saline was boiled to dryness on a heating block. The resulting products were redissolved in ethanol, filtered and the radioactive concentration of the solution measured. This solution was used as a stock solution of ethanolic $NH_4{}^{99m}TcO_4$.

PREPARATION

Ethanol (1.0ml) was added to an $N_2$ purged, sealed reaction vessel, to which an ethanolic solution of tetrabutyl amonium bromide (0.2ml, 200mg/ml), L (0.02ml, $1.47 \times 10^{-4}$ moles), sodium hydroxide solution (0.05ml), 10M, aqueous) and 0.5ml ethanolic ammonium pertechnetate (5GBq/ml) were also added. Final radioactive concentration was 1.56 GBq/ml in a volume of 1.5ml. The resulting solution was heated at 120°C for 1.75 hrs.

After cooling the pH of the reaction mixture was adjusted to pH6 by adding HCl (0.05ml, 6MHClaq), and nitrogen purged saline (3ml) was introduced. The resulting solution was filtered and the radioactive concentration measured (0.33 GBq/ml). The product was then submitted to various analytical techniques, the results of which are summarised below, along with the animal biodistribution data.

ITLC DATA

The final product solution contains no colloid, no free pertechnetate, and indicates that the technetium-99m present in solution is complexed by the ligand in approximately 95% yield.

Methylethylketone ITLC(eluate): suggests a mixture of 2 species with slightly variable $R^f$values

HPLC DATA

2 solvent, gradient HPLC system
a) 20mM phosphate buffer pH 7.4
b) Tetrahydrofuran (THF)
(Initially 100% (a) going to 100% (b) within 17 minutes)
Flow rate = 2ml/minute
Hamilton RPRP column (15 cm x 4.0mm)
Ambient Temperature

Result: broad single peak observed between 6.0 and 6.5 minutes (retention time slightly variable). Slight contamination by 4.2 and 9.3′ species (>5% often visible).

GEL ELECTROPHORESIS

Agarose gel, run at pH 7.4 in 50mM phosphate buffer indicates that the complex is cationic by observed movement towards the cathode.

GM = 8.2 (Gel Mobility = $R^f$x-10)

$R^f$ = -0.82 indicating movement towards cathode

ANIMAL BIODISTRIBUTION DATA

Average values for 2 separate studies, each involving 6 rats.

| Time p.i. in vivo | 2 min | | 60min | |
|---|---|---|---|---|
| | % injected dose/organ | | | |
| | Mean | Std.dev. | Mean | Std.dev |
| Heart | 1.79 | 0.12 | 1.60 | 0.80 |
| Blood | 4.25 | 0.49 | 0.52 | 0.12 |
| Muscle | 24.25 | 4.51 | 23.4 | 5.33 |
| Lung | 2.00 | 0.30 | 0.90 | 0.06 |
| Liver | 17.25 | 1.42 | 2.80 | 0.38 |
| Liver+GI | 34.97 | 1.81 | 41.63 | 2.52 |
| Kidney+Urine | 12.90 | 1.24 | 16.70 | 2.63 |
| Brain | 0.05 | 0.03 | 0.03 | 0.00 |
| | Counts/Gram ratio | | | |
| Heart/Blood | 5.69 | 0.46 | 45.73 | 12.02 |
| Heart/Muscle | 7.65 | 1.82 | 7.43 | 1.92 |
| Heart/Liver | 1.16 | 0.18 | 7.11 | 1.49 |
| Heart/Lung | 1.25 | 0.12 | 3.08 | 0.28 |

Because the ligand L has only one C atom between the two P atoms it is surprising that a cationic, and apparently monomeric, Tc-99m complex is formed. Significant features of the biodistribution are the high heart uptake and retention, together with low background from lungs, blood and liver. Based on this rats data, it may be anticipated that the complex will prove to be a valuable heart imaging agent in humans.

Example 2

This experiment was performed using 99-Tc to demonstrate the formation of a catonic complex of the structure $[TcL_3]^+$.

Synthesis of Tris[Bis(dimethylphosphino)methane] Technetium tetraphenylborate All solvents were purged thoroughly with dinitrogen.

To the suspension of $(NH_4)_2TcCl_6$[(3)] (0.5g, 1.43 mmol) in ethanol (15ml) was added a solution of dmpm (dimethylphosphinomethane) (1.7g, 12.5 mmol) in 1,4-dioxan (1ml) under dinitrogen. The reaction mixture was then heated to reflux for 2h. After cooling down to room temperature, toluene (125 ml) was added to dilute the reaction mixture. The reaction mixture was loaded onto an acidic alumina column (pH 4.5, 15cm long x 2cm diameter) which was prepared in toluene. The firm yellow band was washed down with ethanol, the ethanol solution was concentrated to ca. 20 ml, filtered and $NaBPh_4$ (0.5g, 1.46 mmol) in ethanol (5ml) was added to the filtrate. The solution was cooled to -10°C overnight. Pale yellow powder was collected, washed with cold ethanol (2x15ml) followed by diethyl ether (2x30ml) and dried under vacuum. Yield = 0.21g, 17.8%. Found (Required): C, 56.04 (56.7); H, 7.49 (7.51); P, 20.14 (22.52); Cl, >1.0 (0.0), for $[Tc(dmpm)_3]$ $BPh_4$.
HPLC 8.5 minutes System as in Example 1.

EXAMPLE 3

Ligand = $Me_2PCH_2PMe_2$

Materials

$^{99m}TcO_4Na$* 0.5ml ethanol solution, 2.88GBq
NaOH 0.05ml, 10M aq.solution
Ligand 20µl
EtOH 1.5ml
*A stock sample of $^{99m}Tc$ generator eluate in saline was boiled to dryness. The resulting products were redissolved in ethanol, filtered and the radioactive concentration of the solution measured. This solution was used as a stock solution of ethanolic $^{99m}TcO_4Na$. (Same as in examples 5 ,6 and7 ).

Method

The components were mixed in a sealed, $N_2$ purged vial and heated at 120°C for 90 minutes. The reaction mixture was diluted with 3ml saline and pH of the solution was adjusted to ~7-8 with 1M HCl. The resulting solution was then submitted to chromatographic analysis and animal biodistribution study.

Chromatographic Data

The resulting preparation contains no free $TcO_4^-$ or reduced technetium colloid and indicates that the desired species is present in approximately 95% yield.
Saline $r^f$ = 0.01
Methylethyl ketone $r^f$ = 0.02, 0.71
Acetonitrile:water (50:50) $r^f$ = 0.75

HPLC Data

The complex elutes as a broad single peak between 6.0 and 6.5 minutes. Slight contamination by 4.2 and 9.3 minutes species (<5% are frequently visible).

Animal Biodistribution Data

See Table 1.

**TABLE 1 : ANIMAL BIODISTRIBUTION :**

**RAT** Ligand = $Me_2PCH_2PMe_2$

| Time p.i. in vivo | 2 min | | 60 min | |
|---|---|---|---|---|
| | % injected dose/organ | | | |
| | Mean | Std.dev. | Mean | Std.dev. |
| Heart | 2.03 | 0.00 | 1.77 | 0.16 |
| Blood | 4.13 | 0.40 | 0.45 | 0.05 |
| Muscle | 33.83 | 11.37 | 22.03 | 1.86 |
| Lung | 2.44 | 0.48 | 1.05 | 0.14 |
| Liver | 12.06 | 2.96 | 1.96 | 0.18 |
| Liver+GI | 28.50 | 6.61 | 39.13 | 1.99 |
| Kidney+Urine | 12.44 | 4.17 | 17.33 | 1.84 |
| Brain | - | - | - | - |
| | Counts/Gram Ratio | | | |
| Heart/Blood | 7.33 | 0.14 | 60.17 | 11.66 |
| Heart/Muscle | 7.17 | 2.50 | 8.85 | 1.00 |
| Heart/Liver | 2.15 | 0.67 | 10.70 | 0.50 |
| Heart/Lung | 1.24 | 0.22 | 2.52 | 0.38 |

Example 4

Ligand = $Me_2PCH_2PMe_2$

Materials

$Tc^{99m}O_4$ Na Generator Eluate 0.8ml, 2.586 GBq
Oxalic acid 7mg
Manatol 20g
Ethanol 1ml
Saline 0.2ml
Ligand 15µl

Methods

The components were mixed in a sealed, $N_2$ purged vial and heated at 120°C for 60 minutes; pH of the solution was adjusted to ~7-8 with 1M $KHCO_3$. The resulting solution was then submitted to chromatographic analysis and animal biodistribution study.

Chromatographic Data

The resulting preparation contains no free $TcO_4^-$ or technetium colloid, and indicates that a mixture of species is present.

Saline $r_f = 0.02$
Methylethyl ketone $r_f = 0.04$
Acetonitrile:water (50:50) $r_f = 1.00$

HPLC Data

The major complex elutes as a sharp peak at approximately 8.4 minutes with 20% minor components between 6.4 and 5.1 minutes.

Animal Biodistribution Data

See Table 2

**TABLE 2 : ANIMAL BIODISTRIBUTION**

**RAT** Ligand = $Me_2PCH_2PMe_2$

| Time p.i. in vivo | 2 min | | 60 min | |
|---|---|---|---|---|
| | % injected dose/organ | | | |
| | Mean | Std.dev. | Mean | Std.dev. |
| Heart | 1.43 | 0.28 | 1.02 | 0.08 |
| Blood | 7.59 | 0.81 | 1.72 | 0.13 |
| Muscle | 24.10 | 2.00 | 16.97 | 3.90 |
| Lung | 1.79 | 0.31 | 0.96 | 0.11 |
| Liver | 16.33 | 1.89 | 5.42 | 0.82 |
| Liver+GI | 31.83 | 3.20 | 42.37 | 1.62 |
| Kidney+Urine | 12.53 | 0.70 | 22.83 | 0.80 |
| Brain | 0.05 | 0.02 | 0.03 | 0.01 |
| | Counts/Gram Ratio | | | |
| Heart/Blood | 2.83 | 0.48 | 9.26 | 0.51 |
| Heart/Muscle | 6.81 | 2.57 | 7.24 | 1.82 |
| Heart/Liver | 1.13 | 0.44 | 2.45 | 0.43 |
| Heart/Lung | 1.19 | 0.15 | 1.62 | 0.11 |

EXAMPLE 5

Ligand = $Et_2PCH_2PEt_2$

Materials

$^{99m}TcO_4Na^*$ 1ml ethanol solution, 2.0GBq
Oxalic acid 9mg
Mannitol 20mg
EtOH 1mg
Ligand 30µl in ethanol 10mg pure Ligand

Method

The components were mixed in a sealed, $N_2$ purged vial and heated at 120° for 60'. The reaction mixture was diluted with 3ml saline and pH was adjusted to ~7-8 with 1M $KHCO_3$. The resulting solutin was then submitted to chromatographic analysis and animal biodistribution study.

Chromatographic Data

The resulting preparation contains no $TcO_4^-$ or reduced technetium colloid, and indicates that the desired species is present in approximately 80% purity.
Saline $r_f$ = 0.08
Methylethylketone $r_f$ = 0.34, 0.38
Acetonitrile:water (50:50) $r_f$ = 0.57, 0.89

HPLC Data

The complex elutes as a sharp peak at approximately 6.7 minutes with a ~20% 8.6 minutes component.

Gel Electrophoresis Data

The complex moves as a single band towards the cathode $r_f$ = -0.48 (-indicates movement towards the cathode).

Animal Biodistribution Data

See Table 3.

**TABLE 3 : ANIMAL BIODISTRIBUTION DATA**

**RAT** Ligand = $Et_2PCH_2PEt_2$

| Time p.i. in vivo | 2 min | | 60 min | |
|---|---|---|---|---|
| | % injected dose/organ | | | |
| | Mean | Std.dev. | Mean | Std.dev. |
| Heart | 0.59 | 0.05 | 0.36 | 0 |
| Blood | 6.70 | 0.22 | 1.08 | 0 |
| Muscle | 22.87 | 1.37 | 17.75 | 0 |
| Lung | 1.11 | 0.12 | 0.41 | 0 |
| Liver | 26.50 | 1.93 | 8.19 | 0 |
| Liver+GI | 41.13 | 1.75 | 54.85 | 0 |
| Kidney+Urine | 10.77 | 0.15 | 19.15 | 0 |
| Brain | 0.03 | 0.04 | 0.01 | 0 |
| | Counts/Gram Ratio | | | |
| Heart/Blood | 1.21 | 0.02 | 4.56 | 0 |
| Heart/Muscle | 2.63 | 0.16 | 2.06 | 0 |
| Heart/Liver | 0.23 | 0.03 | 0.47 | 0 |
| Heart/Lung | 0.88 | 0.08 | 1.53 | 0 |

EXAMPLE 6

Lidgand = $Me_2PCH(Me)PMe_2$

Materials

$^{99m}TcO_4Na^*$ 1.0ml ethanol solution, 2.0 GBq
NaOH 0.05ml 10M aqueous solution
Ethanol 1ml
Ligand 30µl

Method

As given in Example 3.

Chromatigraphic Data

The resulting preparation contains no free $TcO_4^-$ or reduced technetium colloid, and indicates that the major species is obtained in approximately 90% yield.

Saline $r_f$ = 0.05
Methylethylketone $r_f$ = 0.02, 0.38
Acetonitrile:water (50:50) $r_f$ = 0.73, 0.97

HPLC Data

The major complex elutesas a sharp peak at approximately 8.9 minutes and a minor component elutes at 6.6 minutes.

Gel Electrophoresis Data

The complexes move as a single band towards the cathode $r_f$ = 0.45 (-indicates movement towards the cathode).

Animal Biodistribution

See Table 4

**TABLE 4**

**RAT** Ligand = $Me_2PCH(Me)PMe_2$

| Time p.i. in vivo | 2 min | | 60 min | |
|---|---|---|---|---|
| | % injected dose/organ | | | |
| | Mean | Std.dev. | Mean | Std.dev. |
| Heart | 1.07 | 0.05 | 0.94 | 0.11 |
| Blood | 5.22 | 0.48 | 0.86 | 0.27 |
| Muscle | 20.87 | 5.40 | 15.97 | 4.84 |
| Lung | 2.39 | 0.39 | 1.13 | 0.25 |
| Liver | 27.13 | 1.99 | 9.96 | 1.20 |
| Liver+GI | 41.63 | 3.07 | 50.00 | 4.61 |
| Kidney+Urine | 11.97 | 1.70 | 16.37 | 0.35 |
| Brain | 0.05 | 0.03 | 0.03 | 0.01 |
| | Counts/Gram Ratio | | | |
| Heart/Blood | 3.15 | 0.84 | 18.23 | 6.56 |
| Heart/Muscle | 5.98 | 1.57 | 7.14 | 1.88 |
| Heart/Liver | 0.56 | 0.11 | 1.20 | 0.16 |
| Heart/Lung | 0.72 | 0.10 | 1.38 | 0.22 |

EXAMPLE 7

Ligand = $Me_2PC(Me)_2PMe_2$

## Materials

$^{99m}TcO_4Na^*$ 1.0ml ethanol solution, 1.5 GBq.
NaOH 0.05ml 10M aqueous solution
Ethanol 1.0ml
ligand 20µl

## Method

As given in Example 3.

## Chromatographic Data

The resulting preparation contains no free $TcO_4^-$ or reduced technetium colloid, and indicates that the compound could be a mixture of complexes.

Saline $r_f = 0.09$
Methylethylketone $r_f = 0.06, 0.17$
Acetonitrile:Water (50:50) $r_f = 0.97$

## HPLC Data

These complexes elute as a broad band, with a retention time of approximately 9.6 minutes.

## Gel Electrophoresis Data

The complexes move as a single band towards the cathode $r_f = -0.25$ (-indicates movement towards the cathode).

Animal Biodistribution Data

See Table 5.

**TABLE 5 : ANIMAL BIODISTRIBUTION DATA**

**RAT** Ligand = $Me_2PC(Me)_2PMe_2$

| Time p.i. in vivo | 2 min | | 60 min | |
|---|---|---|---|---|
| | % injected dose/organ | | | |
| | Mean | Std.dev. | Mean | Std.dev. |
| Heart | 1.28 | 0 | 0.65 | 0.02 |
| Blood | 10.5 | 0 | 1.46 | 0.26 |
| Muscle | 20.1 | 0 | 15.3 | 1.4 |
| Lung | 3.28 | 0 | 1.28 | 0.25 |
| Liver | 30.7 | 0 | 18.1 | 2.1 |
| Liver+GI | 43.7 | 0 | 50.00 | 2.3 |
| Kidney+Urine | 7.19 | 0 | 19.3 | 0.4 |
| Brain | - | - | - | - |
| | Counts/Gram Ratio | | | |
| Heart/Blood | 1.63 | 0 | 6.59 | 1.23 |
| Heart/Muscle | 6.28 | 0 | 4.59 | 0.56 |
| Heart/Liver | 0.45 | 0 | 0.39 | 0.06 |
| Heart/Lung | 0.6 | 0 | 0.8 | 0.1 |

## Claims

1. A cationic complex of Tc-99m with a ligand of formula $R^1R^2C(XY_2)_2$.
where X is in each case P or As,
Y is in each case a hydrogen atom or an unsubstituted or substituted hydrocarbon or hydrocarbonoxy group, and
$R^1R^2C$ is an unsubstituted or substituted methylene group.

2. A complex as claimed in claim 1, wherein X is P, and each Y is C1 - C4 alkyl.

3. A complex as claimed in claim 1, whekrein $R^1$ is H or C1 - C4 alkyl, and $R^2$ is H or $CH_3$.

4. A complex as claimed in claim 1, wherein the ligand is $(CH_3)_2$ $PCH_2$ $P(CH_3)_2$.